(19) Europäisches Patentamt
European Patent Office
Office européen des brevets

(11) EP 4 287 338 B1

(12) **EUROPEAN PATENT SPECIFICATION**

(45) Date of publication and mention of the grant of the patent:
**25.03.2026 Bulletin 2026/13**

(21) Application number: **22873178.2**

(22) Date of filing: **22.09.2022**

(51) International Patent Classification (IPC):
***H01M 10/0567*** *(2010.01)* ***H01M 4/505*** *(2010.01)*
***H01M 4/525*** *(2010.01)* ***H01M 10/0525*** *(2010.01)*
***H01M 10/0569*** *(2010.01)* ***C07F 9/6571*** *(2006.01)*

(52) Cooperative Patent Classification (CPC):
**H01M 4/505; C07F 9/657181; H01M 4/525; H01M 10/0525; H01M 10/0567; H01M 10/0569;**
H01M 2300/0028; Y02E 60/10

(86) International application number:
**PCT/KR2022/014142**

(87) International publication number:
**WO 2023/048473 (30.03.2023 Gazette 2023/13)**

# (54) NON-AQUEOUS ELECTROLYTE SOLUTION FOR LITHIUM SECONDARY BATTERY AND LITHIUM SECONDARY BATTERY INCLUDING THE SAME

NICHTWÄSSRIGE ELEKTROLYTLÖSUNG FÜR LITHIUMSEKUNDÄRBATTERIE UND LITHIUMSEKUNDÄRBATTERIE DAMIT

SOLUTION ÉLECTROLYTIQUE NON AQUEUSE POUR BATTERIE SECONDAIRE AU LITHIUM, ET BATTERIE SECONDAIRE AU LITHIUM LA COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.09.2021 KR 20210127159**
**21.09.2022 KR 20220119103**

(43) Date of publication of application:
**06.12.2023 Bulletin 2023/49**

(73) Proprietor: **LG Energy Solution, Ltd.**
**Seoul 07335 (KR)**

(72) Inventors:
- **KIM, Ha Eun**
**Daejeon 34122 (KR)**
- **OH, Jeong Woo**
**Daejeon 34122 (KR)**
- **LEE, Chul Haeng**
**Daejeon 34122 (KR)**

(74) Representative: **Hoffmann Eitle**
**Patent- und Rechtsanwälte PartmbB**
**Arabellastraße 30**
**81925 München (DE)**

(56) References cited:
**EP-A1- 4 040 560** **CN-A- 112 531 210**
**CN-A- 112 531 210** **JP-A- 2007 250 191**
**KR-A- 20180 050 373** **KR-A- 20190 033 448**
**KR-A- 20200 092 889** **US-A1- 2018 034 011**
**US-A1- 2020 052 322**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 287 338 B1

## Description

## [TECHNICAL FIELD]

Cross-reference to Related Applications

This application claims priority from Korean Patent Application Nos. 10-2021-0127159, filed on September 27, 2021, and 10-2022-0119103, filed on September 21, 2022.

Technical field

The present disclosure relates to a non-aqueous electrolyte solution for lithium secondary battery and a lithium secondary battery including the same.

## [BACKGROUND ART]

Dependence on electric energy is increasing in modern society, and accordingly the production of electric energy is further increasing. In particular, renewable energy generation that does not cause environmental problems when producing electric energy is in the spotlight as a next-generation power generation system. In the case of such renewable energy, since it exhibits intermittent power generation characteristics, a large-capacity power storage device is essential in order to stably supply power. In particular, in recent years, in order to develop an electric vehicle with high specifications, research on a lighter and smaller volume high-specification power storage device has been actively conducted.

Lithium-ion batteries are in the spotlight as a power storage device with the highest energy density that has been commercialized.

The lithium-ion battery includes a positive electrode comprised of a transition metal oxide containing lithium, a negative electrode capable of storing lithium, an electrolyte solution including an organic solvent containing a lithium salt, and a separator.

Among them, the positive electrode stores energy through the redox reaction of transition metals. This leads to the fact that transition metals must be included in positive electrode materials.

Meanwhile, when a lithium secondary battery is exposed to a high-temperature environment, or when charging and discharging of lithium secondary battery are repeated, the oxidation and reduction decomposition of electrolytes occurs, causing gas generation inside the cell, which thus deteriorates the performance of batteries.

In particular, in the case of a secondary battery to which a high-Ni-based positive electrode is applied, a carbonate solvent used as a solvent in the electrolyte is decomposed by the reactive oxygen compound formed from the positive electrode above a certain voltage, which generates a large amount of gas. This in turn causes the depletion of the carbonate content and degradation of the ionic conductivity, so it has a disadvantage of greatly deteriorating the battery performance.

Furthermore, as Lewis acids such as HF, etc. formed by the decomposition of electrolyte salts erode a passivation film formed at an electrode-electrolyte interface, it induces the elution of transition metals from the positive electrode, thereby degrading the structural stability of the positive electrode. Further, the eluted transition metal is electro-deposited on the surface of the negative electrode, which promotes the decomposition of the electrolyte solvent. This accelerates gas generation, thereby degrading the capacity retention of a battery.

Therefore, in order to solve these various problems, there is a need to develop a non-aqueous electrolyte solution capable of suppressing negative electrode electrodeposition of the eluted transition metal or ion substitution by forming a stable film on the electrode surface.

Examples of additives forming passivating film layers on the electrode surface are described in US 2018/034011 A1, CN 112 531 210 A, US 2020/052322 A1.

## [DISCLOSURE OF THE INVENTION]

## [TECHNICAL PROBLEM]

An aspect of the present disclosure provides a non-aqueous electrolyte solution for a lithium secondary battery including an additive capable of forming a stable film on the surface of an electrode.

Another aspect of the present disclosure provides a lithium secondary battery with improved high-temperature durability by including the non-aqueous electrolyte solution for a lithium secondary battery.

**[TECHNICAL SOLUTION]**

In order to achieve the above objects, in an embodiment, according to the invention as defined in appended claim 1, the present disclosure provides a non-aqueous electrolyte solution for a lithium secondary battery comprising a lithium salt, a non-aqueous organic solvent and a compound represented by the following formula (1) as an additive.

[Formula 1]

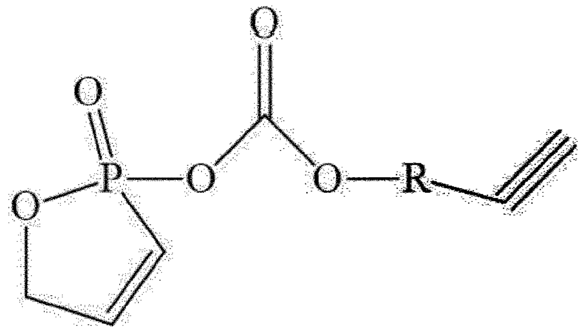

In Formula 1,
R is a substituted or unsubstituted alkylene group having 1 to 5 carbon atoms.
According to another embodiment, according to the invention as defined in appended claim 8,
the present disclosure provides a lithium secondary battery which includes a negative electrode including a negative electrode active material, a positive electrode including a positive electrode active material, a separator disposed between the negative electrode and the positive electrode, and a non-aqueous electrolyte solution; and the non-aqueous electrolyte solution includes the non-aqueous electrolyte solution for a lithium secondary battery of the present disclosure.

**[ADVANTAGEOUS EFFECTS]**

Since a compound represented by Formula 1 included in the non-aqueous electrolyte solution of the present disclosure contains a functional group such as a propargyl group and a carbonate group (-OC(=O)O-) that is easily reduced on the surface of the negative electrode in its structure, it may form a robust SEI or passivation stable film on surfaces of a negative electrode. In addition, since the compound represented by Formula 1 contains a phosphite group ($-PO_3$) in its structure, a solid positive electrode-electrolyte intermediate (CEI) protective layer may be formed on the surface of the positive electrode as well as the negative electrode. Thus, it may effectively suppress the elution of the transition metal from the positive electrode, may suppress a side reaction between the positive electrode and the electrolyte solution at high temperatures and may reduce the deterioration of the SEI film caused by the decomposition product of a lithium salt.

Thus, if the non-aqueous electrolyte solution of the present disclosure including the compound of the above Formula 1 is used, a lithium secondary battery having improved high-temperature storage and cycle characteristics may be achieved.

**[MODE FOR CARRYING OUT THE INVENTION]**

Hereinafter, the present disclosure will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In general, a lithium secondary battery can secure high-temperature storage characteristics by forming a film having passivation ability on the surface of a positive electrode and a negative electrode while the non-aqueous electrolyte is decomposed during initial charge and discharge. However, the film may be deteriorated by Lewis acid materials such as HF and $PF_5$ generated by thermal decomposition of lithium salts ($LiPF_6$, etc.) widely used in lithium ion batteries. That is, a positive electrode structure collapses while the transition metal is eluted from the positive electrode due to the attack of the Lewis acid materials, and thus a highly reactive active oxygen compound is generated. This causes decomposition of the electrolyte solution.

Alternatively, as the transition metals moved to the negative electrode through the electrolyte solution are

electrodeposited on the negative electrode to self-discharge the negative electrode, and destructs a solid electrolyte interphase (SEI) film that gives passivation ability to the negative electrode, the interfacial resistance of the negative electrode is increased by promoting an additional decomposition reaction of the electrolyte solution.

The present disclosure aims at providing a non-aqueous electrolyte solution for a lithium secondary battery with improved SEI forming and enhancing effects by including a compound including a propargyl group (-C≡C-), a phosphite group (-PO3), and a carbonate group (-OC(=O)O-) in the molecular structure as an additive, and a lithium secondary battery including the same. In particular, when a high-Ni-based positive electrode active material is introduced as a positive electrode component, thermal stability may be rapidly reduced. The present disclosure has confirmed that this problem can be solved by using a non-aqueous electrolyte solution including the compound represented by the following Formula 1 as an additive in combination.

## Non-aqueous Electrolyte Solution for Lithium Secondary Battery

According to an embodiment, the present disclosure provides a non-aqueous electrolyte solution for a lithium secondary battery including a lithium salt, a non-aqueous organic solvent, and an additive including a compound represented by the following Formula 1.

[Formula 1]

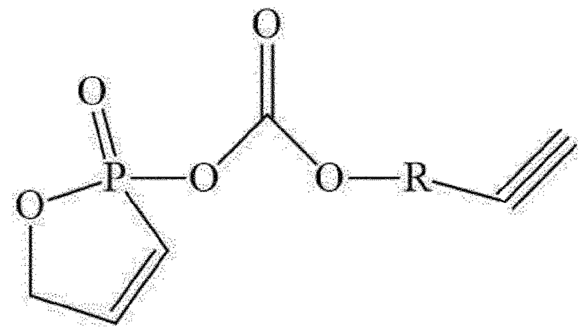

In Formula 1,
R is a substituted or unsubstituted alkylene group having 1 to 5 carbon atoms.

### (1)Lithium Salt

First, a lithium salt will be described as follows.

The lithium salt typically used in a non-aqueous electrolyte solution for a lithium secondary battery may be used as the lithium salt without limitation, and, for example, the lithium salt may include $Li^+$ as a cation, and may include at least one selected from $F^-$, $Cl^-$, $Br^-$, $I^-$, $NO_3^-$, $N(CN)_2^-$, $BF_4^-$, $ClO_4^-$, $B_{10}Cl_{10}^-$, $AlCl_4^-$, $AlO_4^-$, $PF_6^-$, $CF_3SO_3^-$, $CH_3CO_2^-$, $CF_3CO_2^-$, $AsF_6^-$, $SbF_6^-$, $CH_3SO_3^-$, $(CF_3CF_2SO_2)_2N^-$, $(CF_3SO_2)_2N^-$, $(FSO_2)_2N^-$, $(PO_2F_2)^-$, $(FSO_2)(POF_2)N^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $C_4F_9SO_3^-$, $CF_3CF_2SO_3^-$, $CF_3CF_2(CF_3)_2CO^-$, $(CF_3SO_2)_2CH^-$, $CF_3(CF_2)_7SO_3^-$ or $SCN^-$ as an anion.

Specifically, the lithium salt may include a single material selected from LiCl, LiBr, LiI, $LiBF_4$, $LiClO_4$, $LiB_{10}Cl_{10}$, $LiAlCl_4$, $LiAlO_4$, $LiPF_6$, $LiCF_3SO_3$, $LiCH_3CO_2$, $LiCF_3CO_2$, $LiAsF_6$, $LiSbF_6$, $LiCH_3SO_3$, $LiN(SO_2F)_2$ (Lithium bis (fluorosulfonyl) imide, LiFSI), $LiN(SO_2CF_2CF_3)_2$ (lithium bis(pentafluoroethanesulfonyl) imide, LiBETI), $LiN(SO_2CF_3)_2$ (lithium bis (trifluoromethanesulfonyl) imide, LiTFSI) or a mixture of two or more thereof, and, in addition to the above-described lithium salt, any lithium salt commonly used in an electrolyte solution of a lithium secondary battery may be used without limitation. Specifically, the lithium salt may include at least one of $LiBF_4$, $LiPF_6$, $LiN(SO_2F)_2$ or $LiN(SO_2CF_3)_2$, and more specifically may include $LiPF_6$.

The lithium salt may be appropriately changed in a normally usable range, but may be present in a concentration of 0.8 M to 3.0 M, for example, 1.0 M to 3.0 M in the electrolyte solution to obtain an optimum effect of forming a film for preventing corrosion of a surface of an electrode. In a case in which the concentration of the lithium salt satisfies the above range, viscosity of the non-aqueous electrolyte solution may be controlled so that optimum impregnability may be achieved, and an effect of improving capacity characteristics and cycle characteristics of the lithium secondary battery may be obtained by improving mobility of lithium ions.

## (2) Non-aqueous Organic Solvent

Also, a non-aqueous organic solvent will be described as follows.

Various organic solvents commonly used in a non-aqueous electrolyte solution for a lithium secondary battery may be used as the non-aqueous organic solvent without limitation. A type of the non-aqueous organic solvent is not limited as long as decomposition due to an oxidation reaction during charge and discharge of the secondary battery can be minimized and desired properties can be exhibited together with an additive.

Specifically, the non-aqueous organic solvent may include a cyclic carbonate-based compound, a linear carbonate-based compound, a linear ester-based compound, or a mixture thereof.

The cyclic carbonate-based compound has high permittivity and is a high-viscosity compound that easily dissociates lithium salts in a non-aqueous electrolyte solution. Specific examples thereof may include at least one compound selected from ethylene carbonate (EC), propylene carbonate (PC), 1,2-butylene carbonate, 2,3-butylene carbonate, 1,2-pentylene carbonate, 2,3-pentylene carbonate or vinylene carbonate, and among these, ethylene carbonate may be included.

The linear carbonate-based compound is a compound having low viscosity and low permittivity, wherein, as specific examples thereof, at least one compound selected from the group consisting of dimethyl carbonate (DMC), diethyl carbonate (DEC), dipropyl carbonate, ethylmethyl carbonate (EMC), methylpropyl carbonate and ethylpropyl carbonate may be included, and specifically, ethylmethyl carbonate (EMC) may be included.

In the present disclosure, the cyclic carbonate-based compound and the linear carbonate-based compound may be mixed. In this case, the cyclic carbonate-based compound and the linear carbonate-based compound may be mixed in a volume ratio of 10:90 to 80:20, and specifically 30:70 to 50:50.

In a case in which the mixing ratio of the cyclic carbonate-based compound and the linear carbonate-based compound satisfies the above range, a non-aqueous electrolyte solution having a higher electrical conductivity may be prepared.

Furthermore, in the present disclosure, in order to alleviate disadvantages of the carbonate-based compound while also increasing stability during high-temperature and high voltage operation, a linear ester-based compound may be further mixed.

The linear ester-based compound is a compound having relatively higher stability during high temperature and high voltage operation compared to the cyclic carbonate-based compound, and may improve the disadvantages of the cyclic carbonate-based compound that causes gas generation during high-temperature operation, and at the same time, high ionic conductivity may be achieved.

Specific examples of the linear ester-based compound may include at least one selected from methyl acetate, ethyl acetate, propyl acetate, methyl propionate, ethyl propionate, propyl propionate or butyl propionate. Specifically, it may include at least one of ethyl propionate or propyl propionate.

In addition, the non-aqueous electrolyte solution of the present disclosure may further include a cyclic ester-based compound, if necessary.

The cyclic ester-based compound may include at least one selected from γ-butyrolactone, γ-valerolactone, γ-caprolactone, σ-valerolactone or ε-caprolactone.

Meanwhile, in the non-aqueous electrolyte solution for a lithium secondary battery of the present disclosure, other components except for the non-aqueous organic solvent, for example, the remainder except for lithium salts and additives, may be all non-aqueous organic solvents unless otherwise stated.

## (3) Additive

The non-aqueous electrolyte solution for a lithium secondary battery of the present disclosure may include a compound represented by Formula 1 as an additive.

[Formula 1]

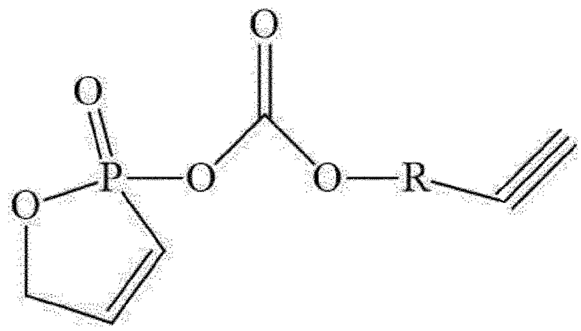

In the Formula 1,
R is a substituted or unsubstituted alkylene group having 1 to 5 carbon atoms.

Since the compound represented by Formula 1 includes a propargyl group as a functional group that is easily reduced on the surface of the negative electrode, it may form an SEI film with high passivation ability on the surface of the negative electrode. Thus, not only may the self-discharge reaction of a graphite-based negative electrode and/or a silicon-based negative electrode caused by the additional reductive decomposition reaction of the electrolyte solution be prevented, but an internal short circuit or an increase in resistance may also be suppressed while improving the high-temperature durability of the negative electrode itself by suppressing the transition metal ions eluted from the positive electrode from being electrodeposited on the surface of the negative electrode.

In addition, as the compound represented by Formula 1 includes a carbonate group in the molecular structure, electron-rich chemicals can easily attack the carbon of the carbonate group during reduction at the negative electrode, to form a more robust SEI on the surface of the negative electrode. In particular, the compound represented by Formula 1 of the present disclosure includes a phosphite group ($-PO_3$) together in the structure so that $PO_3^-$ is adsorbed to the transition metal of the positive electrode structure, and a more stable passivation film may be formed on the surface of the positive electrode.

Specifically, in Formula 1 above, R is a substituted or unsubstituted alkylene group having 1 to 3 carbon atoms.

In this case, the substitution may include at least one substituent selected from halogen, a hydroxyl group (-OH), a carboxyl group (-COOH), an alkyl group having 1 to 6 carbon atoms, an alkenyl group having 2 to 6 carbon atoms, an alkoxy group having 1 to 6 carbon atoms, a cycloalkyl group having 3 to 8 carbon atoms, a heterocycloalkyl group having 2 to 6 carbon atoms, an aryl group having 6 to 10 carbon atoms, or a heteroaryl group having 4 to 10 carbon atoms, and specifically it may include an alkyl group having 1 to 6 carbon atoms.

In addition, in the above Formula 1, R may further include at least one of an oxygen atom, a nitrogen atom, a sulfur atom, or a phosphorus (P) atom in the structure. Specifically, the compound represented by Formula 1 may be a compound represented by the following Formula 1a.

[Formula 1a]

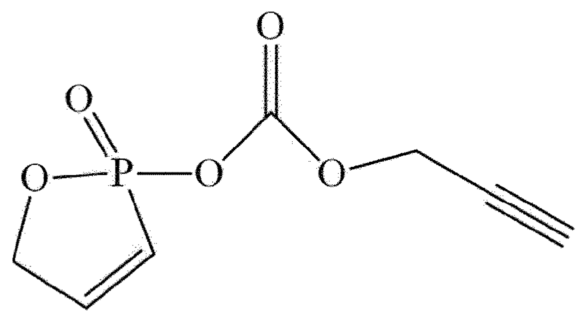

The compound represented by Formula 1 may be included in an amount of 0.1 wt% to 5.0 wt% based on the total weight of the non-aqueous electrolyte solution.

In a case in which the compound represented by Formula 1 is included in the above range, the decomposition products of an electrolyte salt may be effectively removed and a robust passivation film may be formed on the electrode surface while suppressing the disadvantages such as side reactions, initial capacity deterioration and increased

resistance caused by additives.

That is, in a case in which the compound represented by Formula 1 is included in an amount of 0.1 wt% or more, low increase rates in resistance and volume may be maintained during the durability evaluation of batteries while forming a stable film. In addition, when the compound represented by Formula 1 is included in an amount of 5.0 wt% or less, the mobility of ions in the battery may be improved while an increase in the viscosity of the electrolyte solution caused by the surplus compound may be prevented. Excessive film formation may also be suppressed to effectively prevent an increase in battery resistance, thereby preventing the degradation of capacity and cycle characteristics.

Specifically, when the compound represented by Formula 1 is included in an amount of 5.0 wt% or less, more specifically 0.5 wt% to 4.0 wt%, preferably 0.5 wt% to 3.0 wt%, based on the total weight of the non-aqueous electrolyte solution, secondary batteries with further improved overall performance may be manufactured.

**(4) Other Additives**

The non-aqueous electrolyte solution for a lithium secondary battery of the present disclosure may further include other additional additives in order to prevent the occurrence of the collapse of the negative electrode due to the decomposition of the non-aqueous electrolyte solution in a high power environment or to further improve low-temperature high rate discharge characteristics, high-temperature stability, overcharge prevention, and an effect of suppressing battery swelling at high temperature.

Examples of the other additives may be at least one selected from the group consisting of a cyclic carbonate-based compound, a halogen-substituted carbonate-based compound, a sultone-based compound, a sulfate-based compound, a phosphate-based or phosphite-based compound, a borate-based compound, a benzene-based compound, an amine-based compound, an imidazole-based compound, a silane-based compound, and a lithium salt-based compound.

The cyclic carbonate-based compound may be vinylene carbonate (VC) or vinyl ethylene carbonate (VEC), etc.

The halogen-substituted carbonate-based compound may include fluoroethylene carbonate (FEC), etc.

The sultone-based compound, for example, may be at least one compound selected from the group consisting of 1,3-propane sultone (PS),1,4-butane sultone, ethane sultone, 1,3-propene sultone (PRS), 1,4-butene sultone, and 1-methyl-1,3-propene sultone.

The sulfate-based compound, for example, may be ethylene sulfate (Esa), trimethylene sulfate (TMS), or methyl trimethylene sulfate (MTMS).

The phosphate-based or phosphite-based compound, for example, may be at least one compound selected from the group consisting of lithium difluoro(bisoxalato)phosphate, lithium difluorophosphate, lithium tetrafluoro oxalato phosphate, tris(trimethylsilyl)phosphate,tris(trimethylsilyl)phosphite, tris(2,2,2-trifluoroethyl)phosphate, and tris(trifluoroethyl)phosphite.

The borate-based compound may be tetraphenylborate, and lithium oxalyldifluoroborate(LiODFB) or lithium bis (oxalato) borate ($LiB(C_2O_4)_2$, LiBOB), which may form a film on the surface of the negative electrode.

The benzene-based compound may be fluorobenzene, etc. and the amine-based compound may be triethanolamine or ethylenediamine.

The imidazole-based compound may include lithium 2-trifluoromethyl-4,5-dicyanoimidazole, 1-methyl-5-propargyl imidazole, propargyl 1H-imidazole-1-carboxylate, 1-vinyl imidazole, or allyl 1H-imidazole-1-carboxylate.

The silane-based compound may be tetravinylsilane.

The lithium salt-based compound is a compound different from the lithium salt included in the non-aqueous electrolyte solution, wherein the lithium salt-based compound may be $LiPO_2F_2$, $LiSO_3F$ or $LiBF_4$.

Among these other additives, in order to form a more robust SEI on the surface of the negative electrode during the initial activation process, the non-aqueous electrolyte solution may include other additives having an excellent effect of forming a film on the surface of the negative electrode, specifically at least one selected from vinylene carbonate, vinylethylene carbonate, 1,3-propanesultone, ethylene sulfate, fluoroethylene carbonate (FEC), $LiBF_4$ or lithium difluorophosphate ($LiPO_2F_2$).

Two or more compounds may be mixed and used as the other additive, and the other additive may be present in an amount of 0.01 wt% to 30 wt%, specifically 0.01 wt% to 20 wt%, and preferably 0.05 wt% to 15 wt% based on the total weight of the non-aqueous electrolyte solution. When the amount of the other additives is within the above range, it is desirable because the high-temperature storage and cycle characteristics are improved, a side reaction of the battery resulting from the excessive addition is prevented, and precipitation or the unreacted materials still remaining may be prevented.

**Lithium Secondary Battery**

According to another embodiment of the present disclosure, a lithium secondary battery is provided including the

non-aqueous electrolyte solution of the present disclosure.

Specifically, the lithium secondary battery includes a positive electrode, a negative electrode, a separator disposed between the negative electrode and the positive electrode, and a non-aqueous electrolyte solution, wherein the non-aqueous electrolyte solution includes the non-aqueous electrolyte solution according to the present disclosure.

Meanwhile, after forming and accommodating an electrode assembly in a battery case, in which the positive electrode, the negative electrode, and the separator between the positive electrode and the negative electrode are sequentially stacked, the lithium secondary battery of the present disclosure may be prepared by injecting the non-aqueous electrolyte solution of the present disclosure.

The lithium secondary battery of the present disclosure may be prepared according to a conventional method known in the art and used, and a method of preparing the lithium secondary battery of the present disclosure is specifically as described below.

### (1) Positive electrode

The positive electrode according to the present disclosure may include a positive electrode active material layer including a positive electrode active material, and if necessary, the positive electrode active material layer may further include a conductive agent and/or a binder.

The positive electrode active material is a compound capable of reversibly intercalating and deintercalating lithium, and specifically may include a lithium composite metal oxide containing lithium and one or more metals such as cobalt, manganese, nickel or aluminum.

Specifically, the positive electrode active material may include a lithium-cobalt-based oxide (e.g., $LiCoO_2$, etc.), a lithium-manganese-based oxide (e.g., $LiMnO_2$, $LiMn_2O_4$, etc.), lithium-nickel-based oxide (e.g., $LiNiO_2$, etc.), lithium-nickel-manganese-based oxide (e.g., $LiNi_{1-Y}Mn_YO_2$(where 0<Y<1), $LiMn_{2-Z}Ni_ZO_4$(where 0<Z<2)), lithium-nickel-cobalt-based oxide (e.g., $LiNi_{1-Y1}Co_{Y1}O_2$(where 0<Y1<1)), lithium-manganese-cobalt-based oxide (e.g., $LiCo_{1-Y2}Mn_{Y2}O_2$ (where 0<Y2<1), $LiMn_{2-z1}Co_{z1}O_4$ (where 0<Z1<2)), lithium-nickel-manganese-cobalt-based oxide (e.g., $Li(Ni_pCo_qMn_{r1})O_2$(where 0<p<1, 0<q<1, 0<r1<1, p+q+r1=1) or $Li(Ni_{p1}Co_{q1}Mn_{r2})O_4$(where 0<p1<2, 0<q1<2, 0<r2<2, p1+q1+r2=2), or lithium-nickel-cobalt-transition metal (M) oxide (e.g., $Li(Ni_{p2}Co_{q2}Mn_{r3}M_{S2})O_2$(where M is selected from the group consisting of Al, Fe, V, Cr, Ti, Ta, Mg, Ti and Mo, and p2, q2, r3, and s2 are atomic fractions of each independent elements, wherein 0<p2<1, 0<q2<1, 0<r3<1, 0<s2<1, p2+q2+r3+s2=1), and any one thereof or a compound of two or more thereof may be included.

Among these materials, in terms of the improvement of capacity characteristics and stability of the battery, the positive electrode active material may include at least one selected from a lithium-cobalt oxide, lithium-manganese-based oxide, lithium-nickel-manganese-cobalt-based oxide or lithium-nickel-cobalt-transition metal (M) oxide.

Specifically, the positive electrode active material may comprise at least one selected from a lithium-nickel-manganese-cobalt-based oxide in which a nickel content is 55 atm% or more or a lithium-nickel-cobalt-transition metal (M) oxide in which a nickel content is 55 atm% or more. Specifically, the positive electrode active material may include a lithium-nickel-manganese-cobalt-based oxide represented by the following formula 2.

[Formula 2] $Li(Ni_aCo_bMn_cM_d)O_2$

In Formula 2, M is W, Cu, Fe, V, Cr, Ti, Zr, Zn, Al, In, Ta, Y, La, Sr, Ga, Sc, Gd, Sm, Ca, Ce, Nb, Mg, B or Mo, a, b, c and d are atomic fractions of each independent elements, $0.55 \leq a<1$, $0<b \leq 0.3$, $0<c \leq 0.3$, $0 \leq d \leq 0.1$, a+b+c+d=1.

Specifically, a, b, c and d may be $0.60 \leq a \leq 0.95$, $0.01 \leq b \leq 0.20$, $0.01 \leq c \leq 0.20$, and $0 \leq d \leq 0.05$, respectively.

More specifically, a, b, c and d may be $0.80 \leq a \leq 0.95$, $0.02 \leq b \leq 0.15$, $0.02 \leq c \leq 0.15$,and $0 \leq d \leq 0.03$, respectively.

Specifically, the positive electrode active material may be at least one selected from the group consisting of $Li(Ni_{0.6}Mn_{0.2}Co_{0.2})O_2$, $Li(Ni_{0.65}Mn_{0.2}Co_{0.15})O_2$, $Li(Ni_{0.7}Mn_{0.2}Co_{0.1})O_2$, $Li(Ni_{0.8}Mn_{0.1}Co_{0.1})O_2$ and $Li(Ni_{0.85}Co_{0.05}Mn_{0.08}Al_{0.02})O_2$ as typical examples.

When high nickel (Hi-Ni) transition metal oxide, in which a Ni content is greater than 0.55, is used as the lithium transition metal oxide, since sizes of a $Li^{+1}$ ion and a $Ni^{+2}$ ion are similar, a cation mixing phenomenon occurs in which positions of the $Li^{+1}$ ion and the $Ni^{+2}$ ion are exchanged in a layered structure of the positive electrode active material during a charge and discharge process. That is, a nickel transition metal having a d orbital should have an octahedral structure during coordinate bonding according to a change in oxidation number of Ni included in the positive electrode active material in an environment, such as a high temperature, but deformation and collapse of a crystal structure of the positive electrode active material occur while a distorted octahedron is formed by a heterogenization reaction in which the oxidation number is changed or the order of energy levels is reversed by external energy supply. Furthermore, since another side reaction, in which a transition metal, particularly nickel metal is eluted from the positive electrode active material, is caused by the side reaction between the positive electrode active material and the electrolyte solution during high-temperature storage, overall performance of the secondary battery is degraded due to the structural collapse of the positive electrode

active material as well as the depletion of the electrolyte solution.

In the present disclosure, this problem may be alleviated by using the non-aqueous electrolyte solution containing an additive with a specific configuration and the positive electrode including a high nickel (Hi-Ni) transition metal oxide, as a positive electrode active material, together. That is, since a robust ion conductive film is formed on the surface of the positive electrode by the non-aqueous electrolyte solution of the present disclosure, the cation mixing phenomenon of the $Li^{+1}$ ion and the $Ni^{+2}$ ion is suppressed and the side reaction between the positive electrode and the electrolyte solution and the metal elution phenomenon are effectively suppressed, and thus, structural instability of the high-capacity electrode may be alleviated. Therefore, since a sufficient amount of the nickel transition metal for ensuring the capacity of the lithium secondary battery may be secured, energy density may be increased to improve the output characteristics.

The positive electrode active material may be present in an amount of 70 wt% to 99 wt%, specifically, 75 wt% to 99 wt% based on the total weight of the solid content in the positive electrode active material layer. Here, when the amount of the positive electrode active material is 70 wt% or less, the energy density is reduced, and thus capacity may be reduced.

The conductive agent is not particularly limited as long as it has conductivity without causing chemical changes in the battery, and for example, a conductive material such as carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, or nickel powder; conductive whiskers such as zinc oxide or potassium titanate; conductive metal oxide such as titanium oxide; or polyphenylene derivatives, may be used.

The conductive agent is generally included in an amount of 1 to 30wt% based on the total weight of the positive electrode active material layer.

The binder is a component that assists in the binding between the positive electrode active material particles and in the binding between the positive electrode active material and the current collector, wherein the binder is commonly added in an amount of 1 wt% to 30 wt% based on the total weight of the solid content in the positive electrode active material layer. Examples of the binder may be a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; or a silane-based binder.

The positive electrode of the present disclosure as described above may be prepared by a method of preparing a positive electrode which is known in the art. For example, the positive electrode may be prepared by a method in which a positive electrode collector is coated with a positive electrode slurry, which is prepared by dissolving or dispersing the positive electrode active material, the binder, and/or the conductive agent in a solvent and then dried and rolled to form a positive electrode active material layer, or may be prepared by casting the positive electrode active material layer on a separate support, and then laminating a film separated from the support on the positive electrode collector.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used.

The solvent may include organic solvents such as NMP(N-methyl-2-pyrrolidone), etc., and may be used in an amount such that desirable viscosity is obtained when the positive electrode active material as well as optionally the binder and the conductive agent are included. For example, it may be included so that the solid content concentration in the active material slurry including the positive electrode active material and optionally the binder and the conductive material is in the range of 10 wt% to 90 wt%, preferably 30 wt% to 80 wt%.

### (2) Negative Electrode

Next, a negative electrode will be described.

The negative electrode according to the present disclosure includes a negative electrode active material layer including a negative electrode active material, and the negative electrode active material layer may further include a conductive agent and/or a binder, if necessary. The negative electrode active material may include at least one selected from a carbon material capable of reversibly intercalating/deintercalating lithium ions, metal or an alloy of lithium and the metal, a metal composite oxide, a material which may be doped and undoped with lithium, or a transition metal oxide.

As the carbon material capable of reversibly intercalating/deintercalating the lithium ions, a carbon-based negative electrode active material generally used in a lithium ion secondary battery may be used without particular limitation, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon) or hard carbon,

mesophase pitch carbide, or fired cokes.

As the metal or the alloy of lithium and the metal, a metal selected from the group consisting of Cu, Ni, Na, K, Rb, Cs, Fr, Be, Mg, Ca, Sr, Si, Sb, Pb, In, Zn, Ba, Ra, Ge, Al and Sn or an alloy of lithium and the metal may be used.

One selected from the group consisting of PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, $Li_xFe_2O_3$ ($0 \le x \le 1$), $Li_xWO_2$ ($0 \le x \le 1$), and $Sn_xMe_{1-x}Me'_yO_z$ (Me: Mn, Fe, Pb, Ge; Me': Al, B, P, Si, Groups I, II or III elements of the periodic table, or halogen; $0<x\le 1$; $1\le y\le 3$; $1\le z\le 8$) may be used as the metal composite oxide.

The material, which may be doped and undoped with the lithium, may include Si, $SiO_x$($0<x<2$), a Si-Y alloy (where the Y is an element selected from the group consisting of alkali metal, alkaline earth metal, a Group 13 element, a Group 14 element, transition metal, a rare earth element, and a combination thereof, and is not Si), Sn, $SnO_2$, Sn-Y (where the Y is an element selected from the group consisting of alkali metal, alkaline earth metal, a Group 13 element, a Group 14 element, transition metal, a rare earth element, and a combination thereof, and is not Sn), or a mixture of $SiO_2$ and at least one thereof may also be used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may include lithium-containing titanium composite oxide (LTO), vanadium oxide, or lithium vanadium oxide.

According to an embodiment, the negative electrode active material of the present disclosure may be used by containing a carbon-based negative electrode active material or a silicon-based negative electrode active material together with the carbon-based negative electrode active material.

The negative electrode active material may be present in an amount of 80 wt% to 99 wt% based on a total weight of the negative electrode active material layer.

The conductive agent is a component for further improving the conductivity of the negative electrode active material, wherein the conductive agent may be added in an amount of 1 wt% to 20 wt% based on the total weight of the solid content in the negative electrode active material layer. Any conductive agent may be used without particular limitation so long as it has conductivity without causing adverse chemical changes in the battery, and, for example, a conductive material such as: graphite powder such as natural graphite and artificial graphite; carbon black such as acetylene black, Ketjen black, channel black, furnace black, lamp black, and thermal black; conductive fibers such as carbon fibers and metal fibers; conductive powder such as fluorocarbon powder, aluminum powder, and nickel powder; conductive whiskers such as zinc oxide and potassium titanate; conductive metal oxide such as titanium oxide; or polyphenylene derivatives, may be used.

The binder is a component that assists in the binding between the conductive agent, the active material, and the current collector, wherein the binder is commonly added in an amount of 1wt% to 30wt% based on the total weight of the solid content in the negative electrode active material layer. Examples of the binder may be a fluorine resin-based binder including polyvinylidene fluoride (PVDF) or polytetrafluoroethylene (PTFE); a rubber-based binder including a styrene-butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder such as polyvinyl alcohol; a polyolefin-based binder including polyethylene or polypropylene; a polyimide-based binder; a polyester-based binder; or a silane-based binder.

The negative electrode may be prepared by a method of preparing a negative electrode which is known in the art. For example, the negative electrode may be prepared by a method in which a negative electrode collector is coated with a negative electrode slurry, which is prepared by dissolving or dispersing the negative electrode active material as well as selectively the binder and the conductive agent in a solvent, rolled and dried to form a negative electrode active material layer, or may be prepared by casting the negative electrode active material layer on a separate support and then laminating a film separated from the support on the negative electrode collector.

The negative electrode collector may typically have a thickness of 3 $\mu$m to 500 $\mu$m. The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Similar to the positive electrode collector, microscopic irregularities may be formed on the surface of the collector to improve the adhesion of the negative electrode active material. The negative electrode collector, for example, may be used in various shapes such as that of a film, a sheet, a foil, a net, a porous body, a foam body, a non-woven fabric body, and the like.

The solvent may include water or an organic solvent such as NMP and alcohol, and may be used in an amount such that desirable viscosity is obtained when the negative electrode active material as well as optionally the binder and the conductive agent are included. For example, the solvent may be included in an amount such that a concentration of the solid content in the negative electrode slurry including the negative electrode active material as well as optionally the binder and the conductive agent is in a range of 50 wt% to 75 wt%, preferably 40 wt% to 70wt%.

### (3) Separator

As the separator included in the lithium secondary battery according to the present disclosure, a typical porous polymer film generally used, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer may be used alone or by laminating these. Also, a typical porous nonwoven fabric, for example, a nonwoven fabric comprised of high melting point glass fibers or polyethylene terephthalate fibers may be used, but it is not limited thereto.

A shape of the lithium secondary battery of the present disclosure is not particularly limited, but a cylindrical type using a can, a prismatic type, a pouch type, or a coin type may be used.

Hereinafter, the present disclosure will be described in more detail according to examples. However, the invention may be embodied in many different forms and should not be construed as being limited to the embodiments set forth herein. Rather, these example embodiments are provided so that this description will be thorough and complete, and will fully convey the scope of the present disclosure to those skilled in the art. The invention is defined in the appended claims.

### [Examples]

### Examples 1.

After $LiPF_6$ was dissolved in a non-aqueous organic solvent, in which ethylene carbonate (EC) and ethyl methyl carbonate (EMC) were mixed in a volume ratio of 30:70, such that a concentration of the $LiPF_6$ was 1.0 M, a non-aqueous electrolyte solution for a lithium secondary battery was prepared by adding 0.1 wt% of a compound represented by Formula 1a, and 0.5 wt% of vinylene carbonate (VC), 0.5 wt% of 1,3-propanesultone (PS) and 1.0 wt% of ethylene sulfate as other additives (see Table 1 below).

(Secondary Battery Preparation)

A positive electrode active material particle ($Li(Ni_{0.85}Co_{0.05}Mn_{0.08}Al_{0.02})O_2$), a conductive agent (carbon black), and a binder (polyvinylidene fluoride)were added to N-methyl-2-pyrrolidone (NMP), which is a solvent, in a weight ratio of 97.5:1:1.5 to prepare a positive electrode slurry (solid content: 75.0 wt%).A positive electrode collector (Al thin film) with a thickness of 15 $\mu$m was coated with the positive electrode slurry, dried, and then roll-pressed to prepare a positive electrode.

A negative electrode active material (graphite), a binder (SBR-CMC), and a conductive agent (carbon black)were added to water in a weight ratio of 95:3.5:1.5 to prepare a negative electrode slurry (solid content: 60 wt%). A negative electrode collector (Cu thin film) with a thickness of 6um, was coated with the negative electrode slurry, dried, and then roll-pressed to prepare a negative electrode.

An electrode assembly was prepared by disposing a polypropylene porous separator between the prepared positive electrode and the negative electrode, and then was put in a battery case. The above-prepared non-aqueous electrolyte solution for a lithium secondary battery was injected to prepare a lithium secondary battery.

### Example 2.

After $LiPF_6$ was dissolved in a non-aqueous organic solvent such that a concentration of the $LiPF_6$ was 1.0 M, a lithium secondary battery was prepared in the same manner as in Example 1 except that a non-aqueous electrolyte solution was prepared by adding 0.5 wt% of a compound represented by Formula 1a, and 0.5 wt% of vinylene carbonate (VC), 0.5 wt% of 1,3-propanesultone (PS) and 1.0 wt% of ethylene sulfate as other additives (see Table 1 below).

### Example 3.

After $LiPF_6$ was dissolved in a non-aqueous organic solvent such that a concentration of the $LiPF_6$ was 1.0 M, a lithium secondary battery was prepared in the same manner as in Example 1 except that a non-aqueous electrolyte solution was prepared by adding 1.0 wt% of a compound represented by Formula 1a, and 0.5 wt% of vinylene carbonate (VC), 0.5 wt% of 1,3-propanesultone (PS) and 1.0 wt% of ethylene sulfate as other additives (see Table 1 below).

### Example 4.

After $LiPF_6$ was dissolved in a non-aqueous organic solvent such that a concentration of the $LiPF_6$ was 1.0 M, a

lithium secondary battery was prepared in the same manner as in Example 1 except that a non-aqueous electrolyte solution was prepared by adding 3.0 wt% of a compound represented by Formula 1a, and 0.5 wt% of vinylene carbonate (VC), 0.5 wt% of 1,3-propanesultone (PS) and 1.0 wt% of ethylene sulfate as other additives (see Table 1 below) .

**Example 5.**

After $LiPF_6$ was dissolved in a non-aqueous organic solvent such that a concentration of the $LiPF_6$ was 1.0 M, a lithium secondary battery was prepared in the same manner as in Example 1 except that a non-aqueous electrolyte solution was prepared by adding 5.0 wt% of a compound represented by Formula 1a, and 0.5 wt% of vinylene carbonate (VC), 0.5 wt% of 1,3-propanesultone (PS) and 1.0 wt% of ethylene sulfate as other additives (see Table 1 below).

**Comparative Example 1.**

After $LiPF_6$ was dissolved in a non-aqueous organic solvent such that a concentration of the $LiPF_6$ was 1.0 M, a lithium secondary battery was prepared in the same manner as in Example 1 except that a non-aqueous electrolyte solution was prepared by adding 0.5 wt% of vinylene carbonate (VC), 0.5 wt% of 1,3-propanesultone (PS) and 1.0 wt% of ethylene sulfate as additives (see Table 1 below).

**Comparative Example 2.**

After $LiPF_6$ was dissolved in a non-aqueous organic solvent such that a concentration of the $LiPF_6$ was 1.0 M, a lithium secondary battery was prepared in the same manner as in Example 1 except that a non-aqueous electrolyte solution was prepared by adding 0.5 wt% of Prop-2yn-1-yl acetate (CAS No. 627-09-8) represented by the following Formula 3 as an additive instead of a compound represented by Formula 1a(see Table 1 below).

[Formula 3]

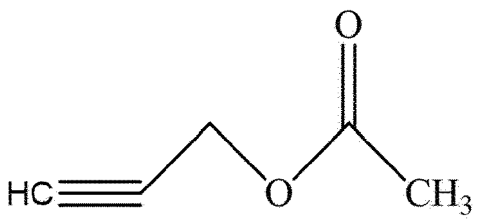

[Table 1]

| Examples | Non-aqueous organic solvent | Additives | | Other additives | |
|---|---|---|---|---|---|
| | | Type | Amount (wt%) | Type | Amount (wt%) |
| Example 1 | EC:EMC=30 :70 volume ratio | Formula 1a | 0.1 | VC/ PS/ ESa | 0.5/0.5/1.0 |
| Example 2 | | Formula 1a | 0.5 | | |
| Example 3 | | Formula 1a | 1.0 | | |
| Example 4 | | Formula 1a | 3.0 | | |
| Example 5 | | Formula 1a | 5.0 | | |
| Comparative Example 1 | | | | | |
| Comparative Example 2 | | Prop-2yn-1-yl acetate | 0.5 | | |

Meanwhile, In Table 1, the abbreviation of each compound has the following meaning.

EC: Ethylene Carbonate

EMC: Ethylmethyl Carbonate

## Experimental Examples

### Experimental Example 1. High-temperature Storage Characteristics Evaluation

#### (1) Evaluation of capacity retention rate and resistance increase rate after high temperature storage

After the lithium secondary batteries prepared in Examples 1 to 5 and the lithium secondary batteries prepared in Comparative Examples 1 and 2 were respectively charged at 0.33C rate to 4.2V under a constant current/constant voltage condition at room temperature (25°C) and were discharged to a 50% depth of discharge (DOD) to adjust a state of charge (SOC) to be 50%, discharging was performed for 10 seconds at 2.5C rate. Then, they were charged at 0.33C rate to 4.2V under a constant current/constant voltage condition at room temperature (25°C), and discharged at 0.33C rate to 2.5V under a constant current condition (1 cycle), and the initial discharge capacity was measured.
Subsequently, after storage at 60°C for 6 weeks, each lithium secondary battery was cooled to room temperature (25°C), charged at 0.33C rate to 4.2V under a constant current/constant voltage condition, and discharged at 0.33C rate to 2.5V under a constant current condition. The capacity and resistance values were measured after a high temperature storage.
The capacity retention (%) was calculated according to Equation 1 below, and the calculated results are presented in Table 2 below. In addition, the resistance increase (%) was calculated according to Equation 2 below, and the calculated results are presented in Table 2 below.

Capacity retention (%) = (discharge capacity after high temperature storage / discharge capacity before high temperature storage) $\times$100 [Equation 1]

Resistance increase(%) = {(resistance after high temperature storage - resistance before high temperature storage)/ resistance before high temperature storage}$\times$100 [Equation 2]

#### (2) Volume increase (%) evaluation after high temperature storage

After each of the lithium secondary batteries prepared in Examples 1 to 5 and Comparative Example 1 and 2 was charged at 0.33C rate to 4.2V at room temperature (25°C), initial thicknesses were measured.
Subsequently, after storage at 60°C for 6 weeks, the thickness of each of the lithium secondary batteries was measured after high temperature storage, and the results thereof are presented in Table 2.

**[Table 2]**

| Examples | Capacity retention (%) | Resistance increase (%) | Volume increase (%) |
|---|---|---|---|
| Example 1 | 84.26 | 12.30 | 6.60 |
| Example 2 | 91.63 | 1.32 | 4.53 |
| Example 3 | 98.53 | 16.90 | 2.58 |
| Example 4 | 94.37 | -7.60 | 3.98 |
| Example 5 | 79.81 | 44.15 | 8.64 |
| Comparative Example 1 | 71.86 | 82.20 | Vent |
| Comparative Example 2 | 73.60 | 78.00 | vent |

Referring to Table 2, it was confirmed that with respect to the lithium secondary batteries of Examples 1 to 5 including the non-aqueous electrolyte solution of the present disclosure, capacity retentions (%) were improved and resistance increase (%) and thickness increase (%) were decreased compared to the lithium secondary batteries of Comparative Examples 1 and 2. In particular, it may be understood that the capacity retention (%), the resistance increase (%) and the thickness increase (%) were substantially improved in Examples 1 to 4 in which the content of the compound represented by Formula 1 in the non-aqueous electrolyte solution is 5 wt% or less.

## Claims

**1.** A non-aqueous electrolyte solution for a lithium secondary battery, the non-aqueous electrolyte solution comprising a

lithium salt, a non-aqueous organic solvent and a compound represented by Formula 1 as an additive:

[Formula 1]

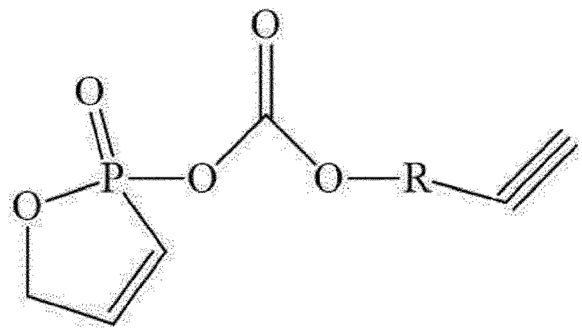

wherein in Formula 1,
R is a substituted or unsubstituted alkylene group having 1 to 5 carbon atoms.

2. The non-aqueous electrolyte solution of claim 1, wherein in Formula 1, R is a substituted or unsubstituted alkylene group having 1 to 3 carbon atoms.

3. The non-aqueous electrolyte solution of claim 1, wherein the substitution includes at least one substituent selected from halogen, a hydroxyl group (-OH), a carboxyl group (-COOH), an alkyl group having 1 to 6 carbon atoms, an alkenyl group having 2 to 6 carbon atoms, an alkoxy group having 1 to 6 carbon atoms, a cycloalkyl group having 3 to 8 carbon atoms, a heterocycloalkyl group having 2 to 6 carbon atoms, an aryl group having 6 to 10 carbon atoms, or a heteroaryl group having 4 to 10 carbon atoms.

4. The non-aqueous electrolyte solution of claim 1, wherein the compound represented by Formula 1 comprises a compound represented by Formula 1a:

[Formula 1a]

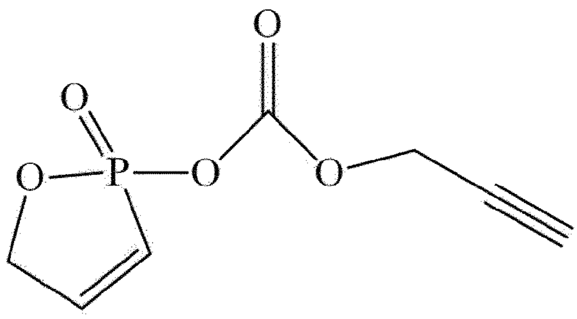

5. The non-aqueous electrolyte solution of claim 1, wherein the compound represented by Formula 1 is included in an amount of 0.1 wt% to 5.0 wt% based on a total weight of the non-aqueous electrolyte solution for a lithium secondary battery.

6. The non-aqueous electrolyte solution of claim 5, wherein the compound represented by Formula 1 is included in an amount of 0.5 wt% to 4.0 wt% based on a total weight of the non-aqueous electrolyte solution for a lithium secondary battery.

7. The non-aqueous electrolyte solution of claim 1, further comprising at least one other additive selected from a cyclic carbonate-based compound, a halogen-substituted carbonate-based compound, a sultone-based compound, a sulfate-based compound, a phosphate-based or phosphite-based compound, a borate-based compound, a benzene-based compound, an amine-based compound, an imidazole-based compound, a silane-based compound, a

lithium salt-based compound or a combination thereof.

8. A lithium secondary battery comprising:

a negative electrode including a negative electrode active material;
a positive electrode including a positive electrode active material;
a separator disposed between the negative electrode and the positive electrode; and
a non-aqueous electrolyte solution,
wherein the non-aqueous electrolyte solution includes the non-aqueous electrolyte solution of claim 1.

9. The lithium secondary battery of claim 8, wherein the positive electrode active material comprises at least one selected from a lithium-cobalt oxide, a lithium-manganese-based oxide, a lithium-nickel-manganese-cobalt-based oxide, or a lithium-nickel-cobalt-transition metal (M) oxide.

10. The lithium secondary battery of claim 8,wherein the positive electrode active material comprises at least one selected from a lithium-nickel-manganese-cobalt-based oxide in which a nickel content is 55 atm% or more, or a lithium-nickel-cobalt-transition metal (M) oxide in which a nickel content is 55 atm% or more.

## Patentansprüche

1. Nichtwässrige Elektrolytlösung für eine Lithiumsekundärbatterie, worin die nichtwässrige Elektrolytlösung ein Lithiumsalz, ein nichtwässriges organisches Lösungsmittel und eine durch Formel 1 dargestellte Verbindung als ein Additiv umfasst:

[Formel 1]

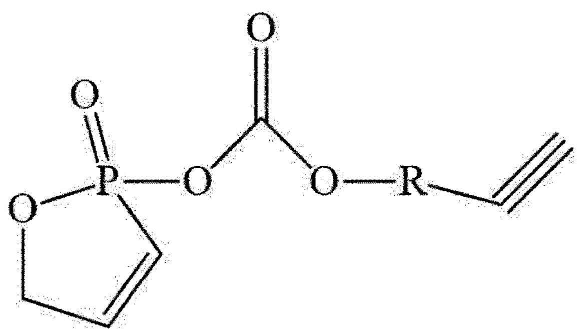

worin in Formel 1
R eine substituierte oder unsubstituierte Alkylengruppe mit 1 bis 5 Kohlenstoffatomen ist.

2. Nichtwässrige Elektrolytlösung gemäß Anspruch 1, worin in Formel 1 R eine substituierte oder unsubstituierte Alkylengruppe mit 1 bis 3 Kohlenstoffatomen ist.

3. Nichtwässrige Elektrolytlösung gemäß Anspruch 1, worin die Substitution mindestens einen Substituenten enthält, ausgewählt aus Halogen, einer Hydroxylgruppe (-OH), einer Carboxylgruppe (-COOH), einer Alkylgruppe mit 1 bis 6 Kohlenstoffatomen, einer Alkenylgruppe mit 2 bis 6 Kohlenstoffatomen, einer Alkoxygruppe mit 1 bis 6 Kohlenstoffatomen, einer Cycloalkylgruppe mit 3 bis 8 Kohlenstoffatomen, einer Heterocycloalkylgruppe mit 2 bis 6 Kohlenstoffatomen, einer Arylgruppe mit 6 bis 10 Kohlenstoffatomen, oder einer Heteroarylgruppe mit 4 bis 10 Kohlenstoffatomen.

4. Nichtwässrige Elektrolytlösung gemäß Anspruch 1, worin die durch Formel 1 dargestellte Verbindung eine durch Formel 1a dargestellte Verbindung umfasst:

[Formel 1a]

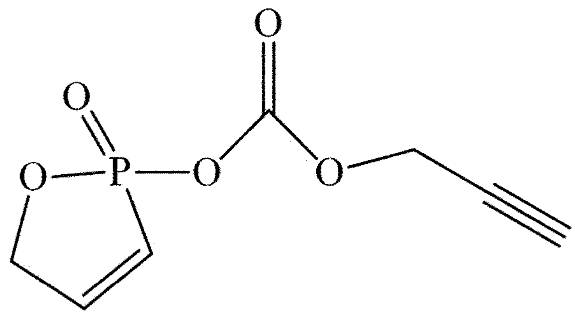

5. Nichtwässrige Elektrolytlösung gemäß Anspruch 1, worin die durch Formel 1 dargestellte Verbindung in einer Menge von 0,1 Gew.-% bis 5,0 Gew.-%, bezogen auf das Gesamtgewicht der nichtwässrigen Elektrolytlösung für eine Lithiumsekundärbatterie, enthalten ist.

6. Nichtwässrige Elektrolytlösung gemäß Anspruch 5, worin die durch Formel 1 dargestellte Verbindung in einer Menge von 0,5 Gew.-% bis 4,0 Gew.-%, bezogen auf das Gesamtgewicht der nichtwässrigen Elektrolytlösung für eine Lithiumsekundärbatterie, enthalten ist.

7. Nichtwässrige Elektrolytlösung gemäß Anspruch 1, ferner umfassend mindestens ein weiteres Additiv, ausgewählt aus einer cyclischen carbonatbasierten Verbindung, einer halogensubstituierten carbonatbasierten Verbindung, einer sultonbasierten Verbindung, einer sulfatbasierten Verbindung, einer phosphatbasierten oder phosphitbasierten Verbindung, einer boratbasierten Verbindung, einer benzolbasierten Verbindung, einer aminbasierten Verbindung, einer imidazolbasierten Verbindung, einer silanbasierten Verbindung, einer lithiumsalzbasierten Verbindung oder einer Kombination davon.

8. Lithiumsekundärbatterie, umfassend:

eine Negativelektrode, die ein Negativelektrodenaktivmaterial enthält;
eine Positivelektrode, die ein Positivelektrodenaktivmaterial enthält;
einen Separator, der zwischen der Negativelektrode und der Positivelektrode angeordnet ist; und
eine nichtwässrige Elektrolytlösung,
worin die nichtwässrige Elektrolytlösung die nichtwässrige Elektrolytlösung gemäß Anspruch 1 enthält.

9. Lithiumsekundärbatterie gemäß Anspruch 8, worin das Positivelektrodenaktivmaterial mindestens eines umfasst, ausgewählt aus einem Lithium-Kobaltoxid, einem Lithium-Mangan-basierten Oxid, einem Lithium-Nickel-Mangan-Kobalt-basierten Oxid oder einem Lithium-Nickel-Kobalt-Übergangsmetall (M)-Oxid.

10. Lithiumsekundärbatterie gemäß Anspruch 8, worin das Positivelektrodenaktivmaterial mindestens eines umfasst, ausgewählt aus einem Lithium-Nickel-Mangan-Kobaltbasierten Oxid, in welchem der Nickelgehalt 55 atm% oder mehr beträgt, oder einem Lithium-Nickel-Kobalt-Übergangsmetall (M)-Oxid, in welchem der Nickelgehalt 55 atm% oder mehr beträgt.

## Revendications

1. Solution électrolytique non aqueuse pour une batterie secondaire au lithium, la solution électrolytique non aqueuse comprenant un sel de lithium, un solvant organique non aqueux et un composé représenté par la Formule 1 en tant qu'additif :

[Formule 1]

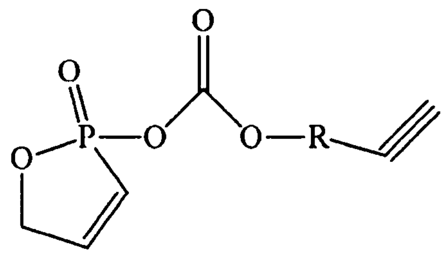

dans laquelle dans la Formule 1,
R est un groupe alkylène substitué ou non substitué présentant 1 à 5 atomes de carbone.

2. Solution électrolytique non aqueuse selon la revendication 1, dans laquelle, dans la Formule 1, R est un groupe alkylène substitué ou non substitué présentant 1 à 3 atomes de carbone.

3. Solution électrolytique non aqueuse selon la revendication 1, dans laquelle la substitution inclut au moins un substituant sélectionné parmi un halogène, un groupe hydroxyle (-OH), un groupe carboxyle (-COOH), un groupe alkyle présentant 1 à 6 atomes de carbone, un groupe alcényle présentant 2 à 6 atomes de carbone, un groupe alcoxy présentant 1 à 6 atomes de carbone, un groupe cycloalkyle présentant 3 à 8 atomes de carbone, un groupe hétérocycloalkyle présentant 2 à 6 atomes de carbone, un groupe aryle présentant 6 à 10 atomes de carbone, ou un groupe hétéroaryle présentant 4 à 10 atomes de carbone.

4. Solution électrolytique non aqueuse selon la revendication 1, dans laquelle le composé représenté par la Formule 1 comprend un composé représenté par la Formule 1a :

[Formule 1a]

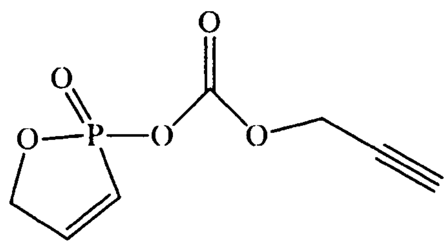

5. Solution électrolytique non aqueuse selon la revendication 1, dans laquelle le composé représenté par la Formule 1 est inclus dans une quantité de 0,1 % en poids à 5,0 % en poids sur la base d'un poids total de la solution électrolytique non aqueuse pour une batterie secondaire au lithium.

6. Solution électrolytique non aqueuse selon la revendication 5, dans laquelle le composé représenté par la Formule 1 est inclus dans une quantité de 0,5 % en poids à 4,0 % en poids sur la base d'un poids total de la solution électrolytique non aqueuse pour une batterie secondaire au lithium.

7. Solution électrolytique non aqueuse selon la revendication 1, comprenant en outre au moins un autre additif sélectionné parmi un composé à base de carbonate cyclique, un composé à base de carbonate substitué par un halogène, un composé à base de sultone, un composé à base de sulfate, un composé à base de phosphate ou composé à base de phosphite, un composé à base de borate, un composé à base de benzène, un composé à base d'amine, un composé à base d'imidazole, un composé à base de silane, un composé à base de sel de lithium ou une combinaison de ceux-ci.

8. Batterie secondaire au lithium comprenant :

une électrode négative incluant un matériau actif d'électrode négative ;
une électrode positive incluant un matériau actif d'électrode positive ;

un séparateur disposé entre l'électrode négative et l'électrode positive ; et
une solution électrolytique non aqueuse,
dans laquelle la solution électrolytique non aqueuse inclut la solution électrolytique non aqueuse selon la revendication 1.

**9.** Batterie secondaire au lithium selon la revendication 8, dans laquelle le matériau actif d'électrode positive comprend au moins un élément sélectionné parmi un oxyde à base de lithium-cobalt, un oxyde à base de lithium-manganèse, un oxyde à base de lithium-nickel-manganèse-cobalt, ou un oxyde de métal (M) de transition lithium-nickel-cobalt.

**10.** Batterie secondaire au lithium selon la revendication 8, dans laquelle le matériau actif d'électrode positive comprend au moins un élément sélectionné parmi un oxyde à base de lithium-nickel-manganèse-cobalt dans lequel une teneur en nickel est de 55 % atm ou plus, ou un oxyde de métal de transition (M) lithium-nickel-cobalt dans lequel une teneur en nickel est de 55 % atm ou plus.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210127159
- KR 1020220119103
- US 2018034011 A1
- CN 112531210 A
- US 2020052322 A1


### Non-patent literature cited in the description


- *CHEMICAL ABSTRACTS*, 627-09-8